# EUROPEAN PATENT APPLICATION

(11) **EP 4 375 334 A1**
(43) Date of publication of application: **29.05.2024**
(21) Application number: 22846127.3
(22) Date of filing: 13.07.2022
(51) Int. Cl.: C08L 81/02, C08L 33/06, C08L 63/00, C08K 3/013, C08K 9/04, C08K 9/06

(54) **HIGH-FILLER CONTENT POLYPHENYLENE SULFIDE COMPOSITE RESIN AND MOLDED PRODUCT USING SAME**

(30) Priority: 19.07.2021 KR 20210094383
(71) Applicant: Toray Advanced Materials Korea Inc., Gumi-si, Gyeongsangbuk-do 39389 (KR)
(72) Inventor: KIM, Ik Hwan, Gumi-si, Gyeongsangbuk-do 39389 (KR); PARK, Jun Sang, Gumi-si, Gyeongsangbuk-do 39389 (KR)
(74) Representative: Fuchs Patentanwälte Partnerschaft mbB
(86) International application number: PCT/KR2022/010181
(87) International publication number: WO 2023/003257

(57) **Abstract**

The present invention relates to a polyphenylene sulfide composite resin and a molded product using the same, and more specifically to a polyphenylene sulfide composite resin and a molded product using the same, wherein the resin has excellent physical properties and superior adhesiveness to different kinds of materials while containing a high content of inorganic fillers.

## Description

### CROSS-REFERENCE TO RELATED APPLICATION

This application claims priority to and the benefit of Korean Patent Application No. 10-2021-0094383, filed on July 19, 2021, the disclosure of which is incorporated herein by reference in its entirety.

### [Technical Field]

The present invention relates to a high-filler content polyphenylene sulfide composite resin having excellent epoxy bonding properties and the properties of high fluidity, high toughness and high strength, and a molded product using the same.

### [Background Art]

Die-casting metals such as aluminum and zinc as materials for electric/electronic device parts, automobile device parts or chemical device parts have been used for precision parts such as optical parts and electric/electronic parts, and these metal parts are being replaced by thermoplastic resins, mainly reinforced plastics.

The materials used for the parts are required to have high heat resistance, chemical resistance and chemical resistance, and polyphenylene sulfide (PPS) is used as one of the thermoplastic resins that meet these requirements.

Additionally, in order to improve physical properties such as strength of the PPS resin, it is common to add and use inorganic fillers such as glass fibers. However, compared to other high-performance resins, PPS resins whose physical properties are enhanced with inorganic fillers have disadvantages such as poor impact resistance, low tensile elongation and poor adhesion to heterogeneous materials compared to other polymer composite materials. In particular, since the adhesive property to an epoxy resin is not good, there is a problem in that the use of the PPS resin is limited.

Recently, in molded products such as condenser cases for xEV (HEV, EV, FCEV) vehicles and electric motor peripheral parts, the situation is that there is an increasing demand for PPS composite materials with excellent adhesion performance to an epoxy resin for the purposes of product durability and cost reduction.

### [Disclosure]

### [Technical Problem]

The present invention has been devised to solve the above problems, and an object of the present invention is to provide a polyphenylene sulfide composite resin that includes a high content of inorganic filler, has excellent bonding properties for different materials, and has an optimal composition and ratio to secure excellent mechanical properties, and a molded product using the same.

### [Technical Solution]

In order to solve the above-described problems, the high-filler content polyphenylene sulfide composite resin of the present invention includes a polyphenylene sulfide (PPS) resin having a melt-flow rate (MFR, based on 315°C and 2.16 kg load) of 350.0 g/10 minutes or more and a H⁺ terminal group; an olefin-based elastomer including an epoxy group; an epoxy resin; and an inorganic filler.

In a preferred exemplary embodiment of the present invention, the PPS resin having a H⁺ terminal group may include a PPS resin including a COOH group as the terminal group.

In a preferred exemplary embodiment of the present invention, the olefin-based elastomer including an epoxy group may include at least one selected from poly(C₁~C₅ alkylene-co-glycidyl methacrylate); 2-propenoic acid, 2-(C₁~C₅ alkyl), oxiranylmethyl ester and a polymer with C₁~C₅ alkene and ethenyl acetate; and a (C₁~C₅ alkylene)-1-(C₇~C₁₀ alkene) copolymer.

In a preferred exemplary embodiment of the present invention, the epoxy resin may include a bisphenol A-type epoxy resin with an epoxy group equivalent weight of 30 to 100 g/eq.

In a preferred exemplary embodiment of the present invention, the inorganic filler may include an inorganic filler which is surface-treated with a coupling agent, and the inorganic filler may include at least one selected from glass fiber, glass beads, calcium carbonate and talc.

In a preferred exemplary embodiment of the present invention, the coupling agent may include at least one selected from an isocyanate-based coupling agent, an organosilane-based coupling agent, an organotitanate-based coupling agent, an organoborane-based coupling agent and an epoxy-based coupling agent.

In a preferred exemplary embodiment of the present invention, the PPS composite resin of the present invention may include 55 to 72 wt.% of the inorganic filler, 0.1 to 0.99 wt.% of the olefin-based elastomer, 0.8 to 3.5 wt.% of the epoxy resin, and the remaining amount of the PPS resin among the total wt.%.

In a preferred exemplary embodiment of the present invention, the PPS composite resin may have a melt-flow rate (MFR, based on 315°C and 2.16 kg load) of 8.0 g/10 minutes or more.

In a preferred exemplary embodiment of the present invention, the PPS composite resin may have a melt viscosity of 330 Pa · s or less at 400 1/s.

In a preferred exemplary embodiment of the present invention, the PPS composite resin may have an adhesive strength to an epoxy adhesive of 6.0 MPa or more, and
In a preferred exemplary embodiment of the present invention, the PPS composite resin may have a tensile strength (based on ISO 527-1,2 measurement) of 175 MPa or more and a tensile elongation (based on ISO 527-1,2 measurement) of 1.1% or more.

In a preferred exemplary embodiment of the present invention, the PPS composite resin may have an impact strength (based on ISO 179-1 measurement) of 9.0 kJ/m² or more.

Still another object of the present invention is to provide a molded product, which is manufactured by using the PPS composite resin.

In a preferred exemplary embodiment of the present invention, the molded product may be an automobile part of electric vehicle (xEV) including Hybrid Electric Vehicles (HEV), Mild Hybrid Electric Vehicles (mHEV), Plug-in Hybrid Electric Vehicles (PHEV), Fuel cell Hybrid Electric Vehicles (FCEV), Battery Electric Vehicles (BEV) and the like.

In a preferred exemplary embodiment of the present invention, the xEV automobile part may include an electric motor peripheral part, such as a capacitor case, a condenser case, a battery case, a cooling circulation part and the like.

### [Advantageous Effects]

The PPS composite resin of the present invention has excellent mechanical properties such as tensile strength, tensile elongation and impact strength, excellent adhesion to different materials and appropriate melt mass flow, and is capable of securing stable productivity because there is no blockage phenomenon during inj ection molding due to a thickening phenomenon caused by the epoxy curing reaction. The PPS composite resin of the present invention is appropriate for manufacturing various molded products, such as automobile parts (e.g., capacitor case, condenser case, battery case, cooling circulation part, etc.) used in xEV manufacturing, which requires high physical properties, electric motor peripheral parts and the like.

### [Description of Drawings]

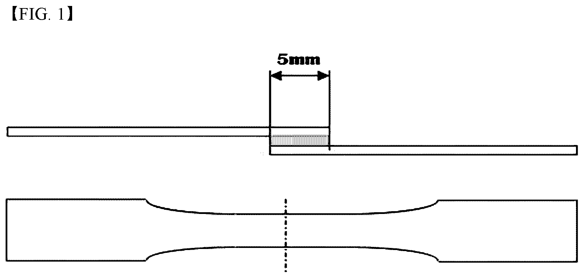

FIG. 1 is a mimetic diagram of a PPS composite resin molded product and an experiment method used in an experiment to confirm the adhesive strength and adhesion destruction behavior in Experimental Example 1.

### [Modes of the Invention]

Hereinafter, the polyphenylene sulfide composite resin (hereinafter, referred to as a 'PPS composite resin') of the present invention will be described in detail.

The PPS composite resin of the present invention includes a PPS resin, an olefin-based elastomer; an epoxy resin and an inorganic filler.

Among the PPS composite resin compositions, the olefin-based elastomer serves to improve physical properties such as impact resistance of the PPS composite resin, and includes an olefin-based elastomer including an epoxy group.

In addition, the olefin-based elastomer including an epoxy group includes a copolymer including an α-olefin-based monomer, and may preferably include at least one selected from poly(C₁~C₅ alkylene-co-glycidyl methacrylate); 2-propenoic acid, 2-(C₁~C₅ alkyl), oxiranylmethyl ester and a polymer with C₁~C₅ alkene and ethenyl acetate; and a (C₁~C₅ alkylene)-1-(C₇~C₁₀ alkene) copolymer, may more preferably include at least one selected from poly(C₁~C₃ alkylene-co-glycidyl methacrylate); 2-propenoic acid, 2-(C₁~C₃ alkyl), oxiranylmethyl ester and a polymer with C₂~C₃ alkene and ethenyl acetate; and a (C₁~C₃ alkylene)-1-(C₇~C₉ alkene) copolymer, and may still more preferably include poly(C₁~C₂ alkylene-co-glycidyl methacrylate; 2-propenoic acid, 2-methyl-, oxiranylmethyl ester and a polymer having ethene and ethenyl acetate (Cas No. 36604-80-5); and a (C₁~C₂ alkylene)-1-(C₇~C₉ alkene) copolymer, in terms of compatibility with other compositions and securing appropriate physical properties of the PPS composite resin.

In addition, the content of the olefin-based elastomer in the PPS composite resin is 0.10 to 0.99 wt.%, preferably, 0.20 to 0.90 wt.%, and more preferably, 0.20 to 0.70 wt.%, based on the total weight of the composite resin, and if the content of the olefin-based elastomer is less than 0.1 wt.%, there may be a problem of low impact strength of the PPS composite resin. In addition, if the content of the olefin-based elastomer exceeds 0.99 wt.%, the impact resistance is excellent, but there may be a problem in that the adhesive strength becomes rather low, and thus, it is preferable to use the same within the above range.

Next, in the PPS composite resin composition, the epoxy resin serves to increase bonding strength with different materials, and it may include at least one selected from a bisphenol A-type epoxy resin, a bisphenol F-type epoxy resin, an alkyl-modified triphenol methane-type epoxy resin, a dicyclopentadiene-modified phenol-type epoxy resin and a cresol novolak-type epoxy resin, may preferably include a bisphenol A-type epoxy resin with an epoxy group equivalent weight of 30 to 100 g/eq, and more preferably, a bisphenol A-type epoxy resin with an epoxy group equivalent weight of 35 to 70 g/eq may be used.

In addition, the content of the epoxy resin in the PPS composite resin is 0.8 to 3.5 wt.%, preferably, 1.0 to 3.2 wt.%, and more preferably, 1.5 to 3.0 wt.%, based on the total weight of the composite resin, and if the content of the epoxy resin is less than 0.8 wt.%, there may be a problem of not securing the bonding strength of the PPS composite resin to different materials. In addition, if the content of the epoxy resin exceeds 3.5 wt.%, there may be problems of not securing moldability during molding due to a thickened shape due to the curing reaction of an epoxy resin and problems of reduced productivity due to clogging of the spinneret, and thus, it is preferable to use the same within the above range.

Next, the inorganic filler in the PPS composite resin composition serves to improve the mechanical properties of the PPS composite resin, and a general inorganic filler used in the art may be used. Preferably, the inorganic filler may include at least one selected from glass fiber, glass beads, calcium carbonate and talc, and more preferably, the organic filler which is surface-treated with a coupling agent may be used.

In addition, the coupling agent may include at least one selected from an isocyanate-based coupling agent, an organosilane-based coupling agent, an organotitanate-based coupling agent, an organoborane-based coupling agent and an epoxy-based coupling agent.

As a preferred embodiment of the inorganic filler applied to the PPS composite resin of the present invention, glass fibers having a diameter of 9 to 23 µm, which are surface-treated with trimethoxy silane as an organosilane-based coupling agent, may be used.

In addition, the content of the inorganic filler in the PPS composite resin is 55 to 72 wt.%, preferably, 57.5 to 71.0 wt.%, and more preferably, 58.5 to 70.5 wt.% of the total weight of the composite resin, and if the content of the inorganic filler is less than 55 wt.%, it may not be possible to manufacture a PPS composite resin with high mechanical properties to be manufactured. In addition, if the content of the inorganic filler exceeds 72 wt.%, the PPS resin content in the composite resin is relatively too small, and since there may be a problem in that the physical properties of the composite resin are rather poor, it is preferable to include an inorganic filler within the above range.

Next, the PPS resin used in the PPS composite resin of the present invention is a PPS resin having a H⁺ terminal group, and preferably, a PPS resin having a carboxyl group (-COOH) as a terminal group, and the PPS resin with a melt-flow rate (MFR, based on 315°C and 2.16 kg load) of 350.0 g/10 minutes or more, and preferably, the PPS resin with an MFR of 360 to 480 g/10 minutes may be used. In this case, if the PPS resin with an MFR of less than 350.0 g/10 minutes is used, it may cause a decrease in production due to an increase in viscosity during compound extrusion, and thus, it is preferable to use an MFR within the above range.

In addition, the content of the PPS resin in the PPS composite resin of the present invention is the wt.% of the remaining amount other than the olefin-based elastomer, the epoxy resin and the inorganic filler described above in 100 wt.% of the composite resin.

The PPS composite resin of the present invention having the composition and composition ratio described above may have a melt-flow rate (MFR, based on 315°C and 2.16 kg load) of 8.0 g/10 minutes or more, and preferably, the MFR may be 8.0 to 30.0 g/10 minutes, and more preferably, the MFR may be 8.0 to 20.0 g/10 minutes.

In addition, the PPS composite resin of the present invention may have a melt viscosity of 330 Pa · s or less at 400 1/s.

In addition, the PPS composite resin of the present invention may have an adhesive strength to an epoxy adhesive of 6.0 MPa or more, preferably, 6.0 MPa to 20.0 MPa, and more preferably, 6.5 MPa to 16.0 MPa.

In addition, the PPS composite resin of the present invention may have a tensile strength (ISO 527-1,2 measurement standard) of 175 MPa or more and a tensile elongation (ISO 527-1,2 measurement standard) of 1.1% or more, preferably, a tensile strength of 178 to 210 MPa and a tensile elongation of 1.1 to 2.0%, and more preferably, a tensile strength of 180 to 210 MPa and ta ensile elongation of 1.1 to 1.5%.

In addition, the PPS composite resin of the present invention may have an impact strength (ISO 179-1 measurement standard) of 9.0 KJ/m² or more, and preferably, 9.0 to 16.0 KJ/m², and more preferably, it may satisfy 9.0 to 15.0 KJ/m².

The PPS composite resin of the present invention may be used for manufacturing a molded product requiring high stiffness, high toughness, dimensional stability and heterogeneous bonding properties, and for example, it may be an automobile part of electric vehicle (xEV) including BEV (Hybrid Electric Vehicles), mHEV (Mild Hybrid Electric Vehicles), PHEV (Plug-in Hybrid Electric Vehicles), FCEV ((Fuel cell Hybrid Electric Vehicles), BEV (Battery Electric Vehicles) and the like. In an embodiment, the molded product of the present invention may be an electric motor peripheral part, such as a capacitor case, a condenser case, a battery case, a cooling circulation part and the like.

Hereinafter, the present invention will be described in more detail through examples, but the following examples are not intended to limit the scope of the present invention, which should be interpreted to aid understanding of the present invention.

### [Example]

### Example 1: Preparation of PPS composite resin

A PPS resin (manufacturer: TORAY) having an MFR of 390 to 395 g/10 minutes (based on 315°C and 2.16 kg load) and having a carboxyl group (-COOH) as a terminal group was prepared.

As an olefin-based elastomer, a polymer (Cas No. 36604-80-5) having 2-propenoic acid, 2-methyl-, oxiranyl methyl ester, ethene and ethenyl acetate was prepared.

As an epoxy resin, a bisphenol A-type epoxy resin having an epoxy equivalent weight of about 43 g/mol was prepared.

As an inorganic filler, glass fibers having a diameter of 9 to 16 µm, which was surface-treated with trimethoxysilane, were prepared.

APPS composite resin was prepared by mixing the PPS resin, the olefin-based elastomer, the epoxy resin and the inorganic filler in content shown in Table 1 below.

### Examples 2 to 5 and Comparative Examples 1 to 8

By using the same composition as in Example 1, but varying the content as shown in Tables 1 and 2 below, PPS composite resins were prepared, and Examples 2 to 5 and Comparative Examples 1 to 8 were performed, respectively.

### Example 6

A PPS composite resin was prepared in the same manner as in Example 1, except that poly(methylene-co-glycidyl methacrylate) was used as an olefin-based elastomer.

### Example 7

A PPS composite resin was prepared in the same manner as in Example 1, except that an ethylene-1-octene copolymer was used as an olefin-based elastomer.

**[Table 1]**

| Classification | Example 1 | Example 2 | Example 3 | Example 4 | Comparati ve Example 1 | Comparati ve Example 2 | Comparati ve Example 3 | Comparati ve Example 4 |
|---|---|---|---|---|---|---|---|---|
| Inorganic filler | 60.00 | 60.00 | 70.00 | 70.00 | 60.00 | 60.00 | 70.00 | 70.00 |
| Olefin-based elastomer | 0.38 | 0.36 | 0.28 | 0.26 | 0.39 | 0.35 | 0.29 | 0.25 |
| Epoxy resin | 1.50 | 3.00 | 1.50 | 3.00 | 0.00 | 4.00 | 0.00 | 4.00 |
| PPS resin | Remaining amount 100 wt.% | | | | | | | |

**[Table 2]**

| Classification | Example 5 | Example 6 | Example 7 | Comparativ e Example 5 | Comparative Example 6 | Comparative Example 7 | Comparativ e Example 8 |
|---|---|---|---|---|---|---|---|
| Inorganic filler | 60.00 | 60.00 | 60.00 | 60.00 | 60.00 | 54.00 | 73.00 |
| Olefin-based elastomer | 0.20 | 0.38 | 0.38 | 0.08 | 1.10 | 0.38 | 0.28 |
| Epoxy resin | 2.00 | 1.50 | 1.50 | 2.00 | 2.00 | 1.50 | 1.50 |
| PPS resin | Remaining amount 100 wt.% | | | | | | |

### Experimental Example: Measurement of physical properties of PPS composite resins

The tensile strength, tensile elongation, impact strength, epoxy adhesive strength and epoxy adhesive destruction behavior, flowability (MFR) and extrusion productivity (1 ton or more) of the PPS composite resins prepared in the examples and comparative examples were measured, and the results are shown in Table 3 and Table 4 below.

### (1) Methods for measuring tensile strength and tensile elongation

These were measured according to ISO 527-1,2.

### (2) Impact strength

According to ISO 179-1, it was measured at 23°C by V-notched charpy.

### (3) Epoxy adhesive strength and epoxy adhesive destruction behavior

The epoxy adhesive strength and epoxy adhesive destruction behavior were measured by preparing an ASTM tensile test specimen with a PPS composite resin molded body, and then cutting the test specimen in half and applying an epoxy adhesive (manufacturer: ESP CHEMICAL IND. CO. LTD., product name: H-560D & EC260(D)) to one side surface of the cross section, and after overlapping by 5 mm as shown in FIG. 1, heat treatment was performed at 80°C for 2 hours, and after heat treatment was performed at 100°C for 4.5 hours, and the test specimen was stretched at a speed of 2 mm/min. In addition, the evaluation of the epoxy adhesive destruction behavior is as follows.
⊚: Parent material destruction (adhesive + parent material destruction), ∘: Cohesive destruction (adhesive destruction), ×: Interface peeling

### (4) Flowability (MFR) and extrusion productivity

The flowability (MFR) and extrusion productivity of the PPS composite resin were measured under the condition of 315°C and a load of 2.16 kg. The extrusion productivity was determined after extruding 1 ton or more of the PPS composite resin and determining whether there were defects such as clogging of the spinneret and molding defects.

**[Table 3]**

| Classificatio n | Example 1 | Example 2 | Example 3 | Example 4 | Comparativ e Example 1 | Comparativ e Example 2 | Comparativ e Example 3 | Comparativ e Example 4 |
|---|---|---|---|---|---|---|---|---|
| Tensile strength (MPa) | 180 | 180 | 175 | 175 | 175 | 175 | 170 | 165 |
| Tensile elongation (%) | 1.2 | 1.1 | 1.1 | 1.0 | 1.0 | 0.9 | 0.9 | 0.8 |
| Impact strength (kJ/m²) | 12.3 | 10.4 | 10.6 | 9.5 | 10.1 | 9.0 | 8.3 | 8.4 |
| Adhesive strength (Mpa) | 9.3 | 11.2 | 6.6 | 7.4 | 3.4 | 12.5 | 2.1 | 8.3 |
| Epoxy adhesive destruction behavior | ○ | ⊚ | ○ | ⊚ | × | ⊚ | × | ⊚ |
| Flowability (MFR, g/10 min) | 14.4 | 12.3 | 9.3 | 8.2 | 18.2 | 6.1 | 13.5 | 4.0 |
| Extrusion productivity | Good | Good | Good | Good | Good | Defective | Good | Defective |

**[Table 4]**

| Classification | Example 5 | Example 6 | Example 7 | Comparative Example 5 | Comparative Example 6 | Comparative Example 7 | Comparative Example 8 |
|---|---|---|---|---|---|---|---|
| Tensile strength (MPa) | 178 | 178 | 177 | 174 | 185 | 167 | 163 |
| Tensile elongation (%) | 1.1 | 1.3 | 1.2 | 0.9 | 1.3 | 1.4 | 0.8 |
| Impact strength | 10.7 | 12.0 | 11.7 | 8.4 | 11.6 | 7.8 | 12.0 |
| (kJ/m²) | | | | | | | |
| Adhesive strength (Mpa) | 9.5 | 9.2 | 8.9 | 9.5 | 5.8 | 10.1 | 4.7 |
| Epoxy adhesive destruction behavior | ⊚ | ○ | ⊚ | ⊚ | × | ⊚ | × |
| Flowability (MFR, g/10 min) | 14.8 | 14.0 | 14.7 | 15.4 | 8.8 | 17.5 | 7.6 |
| Extrusion productivity | Good | Good | Good | Good | Good | Good | Defective |

Looking at the physical property measurement results in Tables 3 and 4, in the case of the present invention of Examples 1 to 7, these showed the results of excellent extrusion productivity when manufacturing extrusion molded products, because these had excellent mechanical properties and good flowability.

On the other hand, in the case of Comparative Example 1 and Comparative Example 3, which did not use an epoxy resin, the epoxy adhesive strength was as low as 4.0 MPa or less, and there was a problem in that only interface peeling occurred in the adhesive destruction behavior.

Additionally, in the case of Comparative Example 2 and Comparative Example 4 using more than 3.50 wt.% of the epoxy resin, the flowability could not be measured because the viscosity was too high, and during extrusion molding, clogging of the spinneret occurred, and there was a problem in the productivity because molding was poor.

Additionally, in the case of Comparative Example 5 using less than 0.1 wt.% of the olefin-based elastomer, compared to Example 5 (0.2 wt.%), there was a problem in that the impact strength was significantly lowered, and in the case of Comparative Example 6 using 1.1 wt.% of the olefin-based elastomer, which was more than 1.0 wt.%, the impact strength was excellent, but there was a problem in that the adhesive strength was significantly lowered.

In the case of Comparative Example 7 using less than 55 wt.% of the inorganic filler, compared to Example 1, the adhesive strength was excellent, but there was a problem in that the remaining mechanical properties were significantly low.

In the case of Comparative Example 8 using an excessive amount of the inorganic filler at 73 wt.%, compared to Example 1, the tensile strength and elongation were good, but still, the impact strength and adhesive strength were lowered, and there were problems in that the flowability and extrusion productivity were poor.

Through the above examples and experimental examples, it was confirmed that the PPS composite resin of the present invention can provide a molded product, and preferably, an extrusion molded product, having excellent adhesiveness and mechanical properties while including a high content of inorganic filler.

## Claims

1. A high-filler content polyphenylene sulfide composite resin, comprising:
a polyphenylene sulfide (PPS) resin having a melt-flow rate (MFR, based on 315°C and 2.16 kg load) of 350.0 g/10 minutes or more and a H⁺ terminal group; an olefin-based elastomer comprising an epoxy group; an epoxy resin; and an inorganic filler.

2. The high-filler content polyphenylene sulfide composite resin of claim 1, wherein the olefin-based elastomer comprising an epoxy group comprises at least one selected from:
poly(C₁~C₅ alkylene-co-glycidyl methacrylate);
2-propenoic acid, 2-(C₁~C₅ alkyl), oxiranylmethyl ester and a polymer with C₁~C₅ alkene and ethenyl acetate; and
a (C₁~C₅ alkylene)-1-(C₇~C₁₀ alkene) copolymer.

3. The high-filler content polyphenylene sulfide composite resin of claim 1, wherein the epoxy resin comprises a bisphenol A-type epoxy resin with an epoxy group equivalent weight of 30 to 100 g/eq.

4. The high-filler content polyphenylene sulfide composite resin of claim 1, wherein the inorganic filler comprises an inorganic filler which is surface-treated with a coupling agent, and
wherein the inorganic filler comprises at least one selected from glass fiber, glass beads, calcium carbonate and talc.

5. The high-filler content polyphenylene sulfide composite resin of claim 4, wherein the coupling agent comprises at least one selected from an isocyanate-based coupling agent, an organosilane-based coupling agent, an organotitanate-based coupling agent, an organoborane-based coupling agent and an epoxy-based coupling agent.

6. The high-filler content polyphenylene sulfide composite resin of claim 1, wherein the high-filler content polyphenylene sulfide composite resin comprises 55 to 72 wt.% of the inorganic filler, 0.1 to 0.99 wt.% of the olefin-based elastomer, 0.8 to 3.5 wt.% of the epoxy resin, and the remaining amount of the PPS resin among the total wt.%.

7. The high-filler content polyphenylene sulfide composite resin according to any one of claims 1 to 6, wherein the polyphenylene sulfide composite resin has a melt-flow rate (MFR, based on 315°C and 2.16 kg load) of 8.0 g/10 minutes or more, an adhesive strength to an epoxy adhesive of 6.0 MPa or more, and a melt viscosity of 330 Pas or less at 400 1/s.

8. The high-filler content polyphenylene sulfide composite resin of claim 7, wherein the polyphenylene sulfide composite resin has a tensile strength (based on ISO 527-1,2 measurement) of 175 MPa or more, a tensile elongation (based on ISO 527-1,2 measurement) of 1.1% or more, and an impact strength (based on ISO 179-1 measurement) of 9.0 kJ/m² or more.

9. A molded product, comprising the high-filler content polyphenylene sulfide composite resin according to any one of claims 1 to 8.

10. The molded product of claim 9, wherein the molded product comprises a capacitor case or an electric motor peripheral part for electric vehicle (xEV).
